# EUROPEAN PATENT APPLICATION

(11) **EP 4 848 736 A1**
(43) Date of publication of application: **02.12.2026**
(21) Application number: 24919912.6
(22) Date of filing: 04.12.2024
(51) Int. Cl.: H04N 21/44

(54) **VIDEO PROCESSING METHOD AND APPARATUS, ELECTRONIC DEVICE, AND STORAGE MEDIUM**

(30) Priority: 24.01.2024 CN 202410102772
(71) Applicant: Beijing Zitiao Network Technology Co., Ltd., Beijing 100190 (CN)
(72) Inventor: YIN, Jiupan, Beijing 100028 (CN); OUYANG, Haibing, Beijing 100028 (CN)
(74) Representative: Grünecker Patent- und Rechtsanwälte PartG mbB
(86) International application number: PCT/CN2024/136761
(87) International publication number: WO 2025/156834

(57) **Abstract**

Embodiments of the present disclosure provide a video processing method, an apparatus, an electronic device, and a storage medium. The method comprises: creating a target video editing task corresponding to a target video material; in response to a first editing operation for triggering the target video editing task, placing a target video clip formed from the target video material on a video editing track of a video editing interface; in response to a second editing operation for the target video clip, determining a target video editing result of adding video effects corresponding to the second editing operation to the target video clip, wherein the video effects corresponding to the second editing operation at least include video beat sync effects or video variable-speed effects; presenting a new video corresponding to the target video editing result.

## Description

### CROSS-reference TO RELATED APPLICATION(S)

The present application claims priority to Chinese Patent Application No. 202410102772.X, filed on January 24, 2024 and entitled "VIDEO PROCESSING METHOD, APPARATUS, ELECTRONIC DEVICE, AND STORAGE MEDIUM", which is incorporated herein by reference in its entirety.

### FIELD

Embodiments of the present disclosure relate to the field of computer technology, and more specifically, to a video processing method, an apparatus, an electronic device, and a storage medium.

### SUMMARY

Embodiments of the present disclosure provide a video processing method, an apparatus, an electronic device, and a storage medium.

In a first aspect, embodiments of the present disclosure provide a video processing method, comprising:
creating a target video editing task corresponding to a target video material;
in response to a first editing operation for triggering the target video editing task, placing a target video clip formed from the target video material on a video editing track of a video editing interface;
in response to a second editing operation for the target video clip, determining a target video editing result of adding video effects corresponding to the second editing operation to the target video clip, wherein the video effects corresponding to the second editing operation at least include video beat sync effects or video variable-speed effects;
presenting a new video corresponding to the target video editing result.

In a second aspect, embodiments of the present disclosure provide a video processing apparatus, comprising:
a creating module for creating a target video editing task corresponding to a target video material;
a first editing module for, in response to a first editing operation for triggering the target video editing task, placing a target video clip formed from the target video material on a video editing track of a video editing interface;
a second editing module for, in response to a second editing operation for the target video clip, determining a target video editing result of adding video effects corresponding to the second editing operation to the target video clip, wherein the video effects corresponding to the second editing operation at least include video beat sync effects or video variable-speed effects;
a video presenting module for presenting a new video corresponding to the target video editing result.

In a third aspect, embodiments of the present disclosure also provide an electronic device, comprising:
at least one processor;
a memory in communication with the at least one processor; wherein
the memory is stored with computer programs executable by the at least one processor, the computer programs, when executed by the at least one processor, causing the at least one processor to fulfill the video processing method according to any of the above embodiments.

In a fourth aspect, embodiments of the present disclosure further provide a computer-readable medium stored with computer instructions, wherein the computer instructions, when executed by a processor, perform the video processing method according to any of the above embodiments.

In accordance with the technical solution of the embodiments of the present disclosure, when the target video editing task is performed on the target video materials, a target video editing task corresponding to a target video material is created; in response to a first editing operation for triggering the target video editing task, a target video clip formed from the target video material is placed on a video editing track of a video editing interface; in response to a second editing operation for the target video clip, a target video editing result of adding video effects corresponding to the second editing operation to the target video clip is determined, wherein the video effects corresponding to the second editing operation at least include video beat sync effects or video variable-speed effects; and a new video corresponding to the target video editing result is presented.

It should be appreciated that the contents described in this Summary are not intended to identify key or essential features of the embodiments of the present disclosure, or limit the scope of the present disclosure. Other features of the present disclosure will be understood more easily through the following description.

### BRIEF DESCRIPTION OF THE DRAWINGS

Through the following detailed description with reference to the accompanying drawings, the above and other objectives, features, and advantages of embodiments of the present disclosure will become more apparent. Throughout the drawings, same or similar reference signs indicate same or similar elements. It should be appreciated that the drawings are schematic and the original components and the elements are not necessarily drawn to scale.
Fig. 1 illustrates a schematic flowchart of a video processing method provided by embodiments of the present disclosure;
Fig. 2 illustrates a schematic flowchart of another video processing method provided by embodiments of the present disclosure;
Fig. 3a illustrates a schematic flowchart of adding video beat sync effects to a video clip provided by embodiments of the present disclosure;
Fig. 3b illustrates a schematic flowchart of obtaining beat sync while adding video beat sync effects to a video clip provided by embodiments of the present disclosure;
Fig. 4a illustrates a schematic diagram of an orthogonal situation between a video clip and an audio clip on the editing track provided by embodiments of the present disclosure;
Fig. 4b illustrates a schematic diagram of an orthogonal situation between another video clip and an audio clip on the editing track provided by embodiments of the present disclosure;
Fig. 4c illustrates a schematic diagram of an orthogonal situation between a further video clip and an audio clip on the editing track provided by embodiments of the present disclosure;
Fig. 4d illustrates a schematic diagram of an orthogonal situation between another video clip and an audio clip on the editing track provided by embodiments of the present disclosure;
Fig. 4e illustrates a schematic diagram of an orthogonal situation between a further video clip and an audio clip on the editing track provided by embodiments of the present disclosure;
Fig. 5 illustrates a schematic design diagram of a framer provided by embodiments of the present disclosure;
Fig. 6 a schematic flowchart of another video processing method provided by embodiments of the present disclosure;
Fig. 7 illustrates a schematic flowchart of adding video variable-speed effects to a video clip provided by embodiments of the present disclosure;
Fig. 8 illustrates a schematic diagram of branches of applying video variable-speed effects and video beat sync effects respectively to the video clip provided by embodiments of the present disclosure;
Fig. 9 illustrates a structural diagram of a video processing apparatus provided by embodiments of the present disclosure;
Fig. 10 illustrates a structural diagram of an electronic device for implementing the video processing method provided by the embodiments of the present disclosure.

### DETAILED DESCRIPTION OF EMBODIMENTS

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It is to be understood that the drawings and the embodiments of the present disclosure are provided merely for the exemplary purpose, rather than restricting the protection scope of the present disclosure.

It should be appreciated that various steps disclosed in the method implementations of the present disclosure may be executed by different orders, and/or in parallel. Besides, the method implementations may include additional steps and/or omit the illustrated ones. The scope of the present disclosure is not restricted in this regard.

The term "includes" and its variants are to be read as open-ended terms that mean "includes, but is not limited to." The term "based on" is to be read as "based at least in part on." The term "one embodiment" is to be read as "at least one embodiment." The term "a further embodiment" is to be read as "at least one further embodiment." The term "some embodiments" is to be read as "at least some embodiments." Definitions related to other terms will be provided in the following description.

It is noted that the terms "first", "second" and so on mentioned in the present disclosure are provided only to distinguish different apparatuses, modules or units, rather than limiting the sequence of the functions executed by these apparatuses, modules or units or dependency among apparatuses, modules or units.

It is reminded here that the modifications including "one" and "more" in the present disclosure are schematic and non-restrictive. Those skilled in the art should understand that the above modifications are to be interpreted as "one or more" unless indicated otherwise in the context.

Names of messages or information exchanged between a plurality of apparatuses in the implementations of the present disclosure are provided only for explanatory purposes, rather than being restrictive.

The rapid development of network video platforms leads to an ever-increasing need for video processing. For example, it is sometimes expected to match a background music for the video to generate a music sync video etc.

However, the related solutions can only edit videos containing designated actions while the matching of background music is done manually. It is impossible to automatically generate videos based on the rhythm of background music. This consumes a lot of manpower in actual business scenarios, and the video editing efficiency is low. In addition, errors are prone to occur during the manual editing process, resulting in inaccurate edited videos.

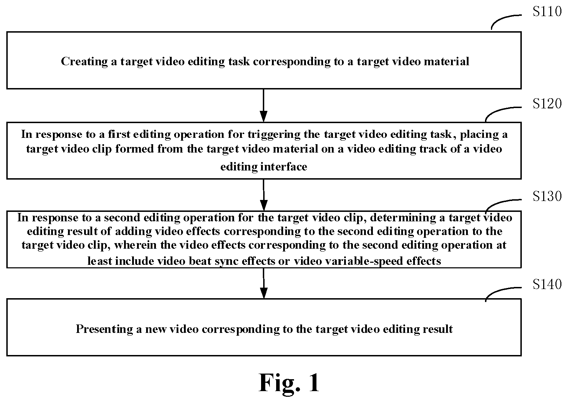

Fig. 1 illustrates a schematic flowchart of a video processing method provided by embodiments of the present disclosure. Embodiments of the present disclosure are adapted to situations where video beat sync effects and video variable-speed effects are added to video materials. The method may be executed by a video processing apparatus, which apparatus may be implemented in the form of software and/or hardware and is generally integrated on any electronic devices having network communication functions. The electronic device may be mobile terminal, PC terminal or server etc.

As shown in Fig. 1, the video processing method according to embodiments of the present disclosure may include the following procedure of:
S110: creating a target video editing task corresponding to a target video material.

A preset video material library includes a variety of candidate video materials. In response to a triggering operation of a target video material in the various candidate video materials, a target video editing task is created for the target video material, wherein the target video editing task performs a video editing on the target video material.

S120: in response to a first editing operation for triggering the target video editing task, placing a target video clip formed from the target video material on a video editing track of a video editing interface.

When the video editing task is created for a selected target material, a first editing operation for triggering the target video editing task may be performed. At this point, a video editing interface is displayed and presents an editing track. On the editing track, a video track for carrying a video clip correspondingly formed by video materials is presented.

S130: in response to a second editing operation for the target video clip, determining a target video editing result of adding video effects corresponding to the second editing operation to the target video clip, wherein the video effects corresponding to the second editing operation at least include video beat sync effects or video variable-speed effects.

Optionally, the target video editing task includes adding video beat sync effects or video variable-speed effects to the target video materials, wherein the video beat sync effects enhance the rhythm of the video through adding special visual effects or transitions at a key frame or a particular time point of the video during video editing. The video beat sync effects may produce a unique visual change for the video over these time points. The video variable-speed effects may change the play speed of the video to produce the effects of playing the video in fast-forward or slow motion; the video variable-speed effects fulfill the effects of speeding up or slowing down the play of the video by adjusting the frame rate of the video. For example, the slow motion may highlight details and actions in the video while the fast-forward motion may create an intense and excited atmosphere.

Optionally, the second editing operation specifically is a triggering operation of a target video effect identifier in at least one candidate video effect identifier presented for the target video clip, wherein the at least one candidate video effect identifier presented on the video editing interface is presented at a target effect display window, and the target effect display window is presented when an effect addition identifier presented on the video editing interface corresponding to the target video clip is triggered.

S140: presenting a new video corresponding to the target video editing result.

In accordance with the technical solution of the embodiments of the present disclosure, when the target video editing task is performed on the target video materials, a target video editing task corresponding to a target video material is created; in response to a first editing operation for triggering the target video editing task, a target video clip formed from the target video material is placed on a video editing track of a video editing interface; in response to a second editing operation for the target video clip, a target video editing result of adding video effects corresponding to the second editing operation to the target video clip is determined, wherein the video effects corresponding to the second editing operation at least include video beat sync effects or video variable-speed effects; and a new video corresponding to the target video editing result is presented. The present solution can achieve quickly adding video beat sync effects and video variable-speed effects to the video without professional effect editing skills, which greatly improves the efficiency of effects editing of the target video materials and makes the video production process more efficiently and conveniently.

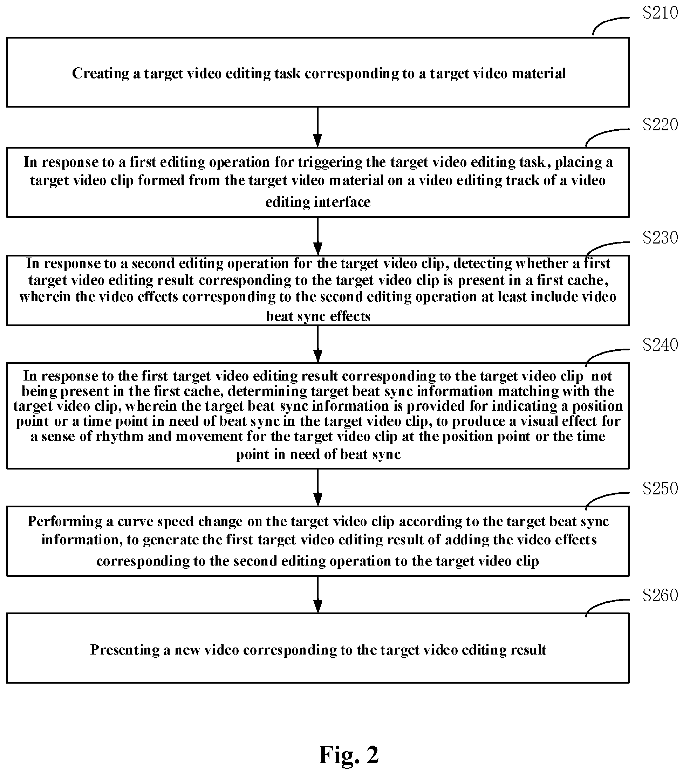

Fig. 2 illustrates a schematic flowchart of another video processing method provided by an embodiment of the present disclosure. On the basis of the technical solution of the above embodiments, the technical solution according to this embodiment further optimizes the procedure of determining a target video editing result of adding video effects corresponding to the second editing operation to the target video clip in the preceding embodiments. This embodiment may be combined with respective optional solutions in the above one or more embodiments.

As shown in Fig. 2, the video processing method according to this embodiment of the present disclosure may include the following procedure of:
S210: creating a target video editing task corresponding to a target video material.
S220: in response to a first editing operation for triggering the target video editing task, placing a target video clip formed from the target video material on a video editing track of a video editing interface.
S230: in response to a second editing operation for the target video clip, detecting whether a first target video editing result corresponding to the target video clip is present in a first cache, wherein the video effects corresponding to the second editing operation at least include video beat sync effects.

For the target video clip placed on the video editing track of the video editing interface, if the second editing operation has been triggered for the same target video clip before, the second editing operation is triggered for the target video clip again, and a first target video editing result corresponding to a target video clip generated from adding video beat sync effects corresponding to the second editing operation to the target video clip is cached in a first cache.

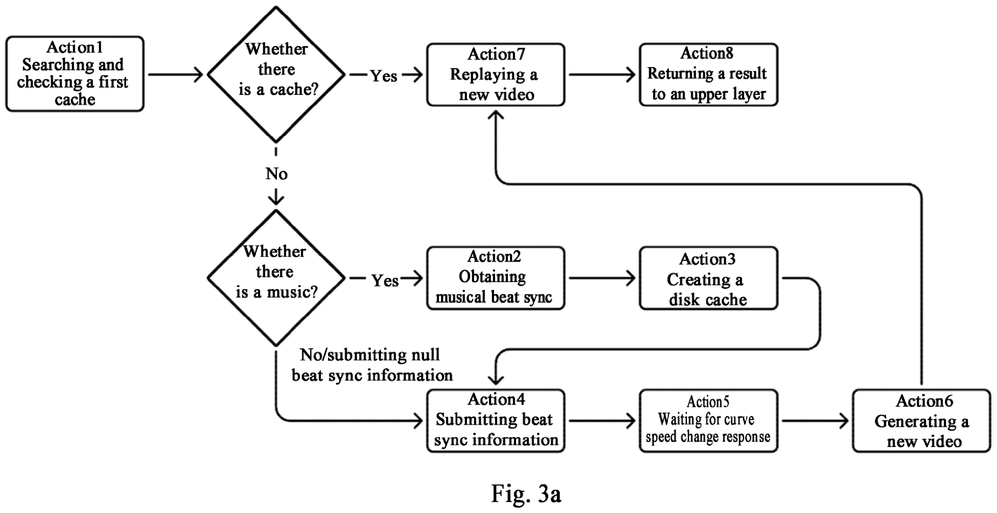

For this, with reference to Fig. 3a, when it is required to trigger the second editing operation for the target video clip placed on the video editing track of the video editing interface, video editing results saved in the first cache may be traversed to determine whether the first target video editing result generated from adding video beat sync effects corresponding to the second editing operation to the target video clip is present. If yes, the first target video editing result corresponding to the target video clip placed on the video editing track of the video editing interface is directly read from the first cache.

With respect to the above approach, in case that the video clip on the video track is not modified or the video clip is modified without affecting its video effect, if the first target video editing result can be directly obtained from the previous caches and further used, an operation of obtaining the target video editing result by the second editing operation has a delay of 0. This means that the first target video editing result of the target video clip would be presented immediately without waiting after the second editing operation is performed. On account of such instant response experience, the procedure is extremely fluent and the second editing operation is quite smooth and natural.

S240: in response to the first target video editing result corresponding to the target video clip not being present in the first cache, determining target beat sync information matching with the target video clip, wherein the target beat sync information is provided for indicating a position point or a time point in need of beat sync in the target video clip, to produce a visual effect for a sense of rhythm and movement for the target video clip at the position point or the time point in need of beat sync.

Referring to Fig. 3a, if it is discovered that the first cache lacks the first target video editing result corresponding to the target video through search and check, target beat sync information matching with the target video clip may be determined in the first place. The target beat sync information may indicate a position point or a time point where a beat sync is required in the target video clip. The target beat sync information may indicate a time point or a position point where images of the target video clip match with the rhythms or beats of the audio in the video editing procedure, such that the images of the target video clip are consistent with the rhythms or beats of the audio.

By determining the target beat sync information, a sense of rhythm and movement may be produced for the target video clip at the position points or the time points where beat sync is desired. Further, the video becomes more attractive and interesting and it is easier to immerse in the atmosphere of the video. For example, the target beat sync information may be determined according to rhythms and beats of the music in the video, to match the images in the video with the rhythms of the music and create a strong sense of rhythm. In a dancing video, the target beat sync information may be determined in accordance with key points of dancing moves, such that the dancing moves in the video echo with the music rhythms, making the dance more expressive and appealing.

As an alternative yet non-restrictive implementation, determining the target beat sync information matching with the target video clip includes steps A1-A3:
Step A1: detecting whether a reference audio clip is present on an audio editing track of the video editing interface corresponding to the target video clip, wherein the reference audio clip is provided for providing the position point or the time point in need of beat sync in the target video clip on the video editing track.

With reference to Fig. 3a, when it is detected that the first target video editing result generated from adding the video beat sync effects corresponding to the second editing operation to the target video clip is not present in the first cache, it is further detected whether a reference audio clip is present on an audio editing track of the video editing interface corresponding to the target video clip currently being edited. The reference audio clip provides a position point or a time point where the beat sync is required in the target video clip, i.e., rhythms and beats of the audio clip are extracted from the reference audio clips to generate the position point or the time point in need of beat sync in the target video clip.

Optionally, the reference audio clip may be an audio clip corresponding to an audio material which is imported synchronously with the target video material. Of course, the reference audio clip may also be an audio clip associated with video effects corresponding to the second editing operation and may be used as reference. The reference audio clip contains rhythm and beat information of the audio, which may help determining the position point or the time point in need of beat sync in the target video clip.

Step A2: in response to the reference audio clip being present, determining the target beat sync information to be provided to the target video clip by the reference audio clip, wherein the target beat sync information includes a number of musical beats in the reference audio clip and a time offset of each musical beat on a timeline corresponding to the reference audio clip.

With reference to Fig. 3a, if it is detected that one reference audio clip is present on the audio editing track of the video editing interface corresponding to the target video clip, the target beat sync information to be provided to the target video clip by the reference audio clip may be further determined. The target beat sync information includes two key elements: the number of musical beats and a time offset of each musical beat on a timeline corresponding to the reference audio clip.

The number of musical beats indicates the number of beats contained in the reference audio clip. The time offset represents a relative position of each musical beat on a timeline corresponding to the reference audio clip, in units of time (such as seconds, milliseconds and the like) for indicating a specific time position of each beat in the reference audio clip. For example, the target beat sync information may be represented in the following array forms: Array<{offsetMs, beats}>data, where beats indicate a beat in the audio clip, and the music in general is in four-quarter time or three-quarter time etc.; offsetMs refers to the time offset of the beats on the timeline corresponding to the audio clip.

Step A3: in response to the reference audio clip not being present, determining pre-stored default beat sync information as the target beat sync information matching with the target video clip.

Referring to Fig. 3a, if it is detected that no reference audio clip is present on the audio editing track of the video editing interface corresponding to the target video clip, the pre-stored default beat sync information may serve as the target beat sync information matching with the target video clip. The default beat sync information refers to some preset regular beat sync modes or rules and may be set in accordance with general music rhythms and video editing requirements. A basic beat sync reference is thus provided, such that some basic rhythms may still be added to the target video clip even without particular reference audio clips.

For the above solution, the object of the target beat sync information is to synchronize the music rhythms in the reference audio clip with the images of the target video clip. The number of musical beats and the time offset are obtained to accurately locate the positions in need of beat sync in the target video clip, to coordinate the music with the video.

As an alternative yet non-restrictive implementation, detecting whether the first target video editing result corresponding to the target video clip is present in the first cache includes following steps B1-B2:
Step B1: determining a first video identifier corresponding to the target video clip, wherein the first video identifier is determined based on a storage path of the target video material corresponding to the target video clip, start and end time of the target video clip, an audio identifier of the reference audio clip corresponding to the target video clip and a relative position between the reference audio clip and the target audio clip on a reference timeline, wherein the reference audio clip is a partial audio clip overlapping with the target video clip on the reference timeline on the audio editing track, and wherein the reference timeline is a timeline corresponding to the video editing track and the audio editing track of the video editing interface.
Step B2: detecting whether the first target video editing result matching with the first video identifier corresponding to the target video clip is present in the first cache.

In case that the video clip on the video track is not modified or the video clip is modified without affecting the final effect, a response delay of the second editing operation may be reduced to 0 by using the previous caches, which greatly improves the fluency of the operation. However, it is a risky operation to introduce the cache since an error may be introduced under inaccurate calculation scenarios, which leads to changes that could not be monitored and further causes application failure. In this regard, it is required to design a calculation factor of the cache to decide cache accuracy. In the procedure of adding the video beat sync effects corresponding to the second editing operation to the target video clip, the solution first considers the target video clip per se and a uniqueness of the video is marked by a file path of the video clip per se plus start and end time of the play of each video. Then, the reference audio clip, marked by a unique representation of the audio clip and the beat sync information for generating the variable-speed video (using the default key in case of no reference audio clip), is further taken into account. In the end, the solution considers a relative position between the reference audio clip and the target video clip on the timeline, marked by an overlapping position of the two (using the default key in case of no overlapping). In this way, a first video identifier corresponding to the target video clip is obtained to further accurately search the corresponding first target video editing result in the cache.

As an alternative yet non-restrictive implementation, determining the target beat sync information to be provided to the target video clip by the reference audio clip includes following steps C1-C3:
C1: detecting whether the target beat sync information to be provided to the target video clip by the reference audio clip is present in a second cache.
C2: in response to the target beat sync information being present in the second cache, obtaining pre-stored target beat sync information matching with the target video clip in the second cache.

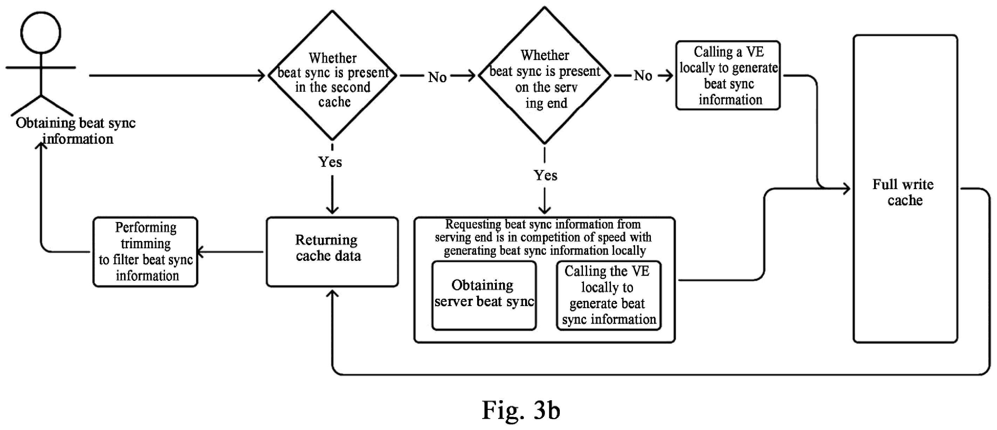

With reference to Fig. 3b, in order to determine the target beat sync information to be provided to the target video clip by the reference audio clip, it is preferred to first try to find and check whether the second cache has stored the target beat sync information related to the reference audio clip. The second cache is a temporary storage area for storing data, which may increase the data access speed under certain circumstances. If it is determined that the target beat sync information is present in the second cache, the target beat sync information matching with the target video clip may be quickly obtained from the second cache. This may avoid repeated calculations or obtaining the same information from other data sources and the efficiency is thus improved. Optionally, in case of presence of the target beat sync information in the second cache, the target beat sync information stored in the second cache may be subject to TrimRange filtering and then returned to a caller. Through the TrimRange filtering of the second cache, it is ensured that the target beat sync information returned to the caller is related to the current requirement.

Step C3: in response to the target beat sync information not being present in the second cache, obtaining the target beat sync information to be provided to the target video clip by the reference audio clip by using a serving end or a local terminal to parse audio beats in the reference audio clip.

Referring to Fig. 3b, if the second cache lacks the target beat sync information related to the reference audio clip, it is required to parse audio beats in the reference audio clip using a serving end or a local terminal, to generate the target beat sync information provided to the target video clip by the reference audio clip.

With the above steps, the target beat sync information can be efficiently obtained and processed to satisfy the video editing needs of the video clip. This procedure is intended to increase the data access speed, reduce repeated calculations and further enhance the overall video editing performance and experience.

As an alternative yet non-restrictive implementation, obtaining the target beat sync information to be provided to the target video clip by the reference audio clip by using a serving end or a local terminal to parse audio beats in the reference audio clip includes the following steps D1-D3:
Step D1: detecting whether the target beat sync information to be provided to the target video clip by the reference audio clip is present on the serving end.
Step D2: in response to the target beat sync information not being present in the second cache and not being present on the serving end, obtaining from the second cache the target beat sync information to be provided to the target video clip by the reference audio clip corresponding to first beat sync information after the first beat sync information is written into the second cache in full, wherein the first beat sync information is the target beat sync information to be provided to the target video clip by the reference audio clip generated from parsing the audio beats in the reference audio clip by calling a video editor of the local terminal.
Step D3: in response to the target beat sync information not being present in the second cache but presenting on the serving end, obtaining from the second cache the target beat sync information to be provided to the target video clip by the reference audio clip corresponding to second beat sync information after the second beat sync information is written into the second cache in full, wherein the second beat sync information is the target beat sync information to be provided to the target video clip by the reference audio clip obtained first from a competition between a first obtaining operation and a second obtaining operation, wherein the first obtaining operation is provided to call the video editor of the local terminal to parse the audio beats in the reference audio clip to generate the target beat sync information to be provided to the target video clip by the reference audio clip, and wherein the second obtaining operation is provided for issuing a request to the serving end to pull the target beat sync information to be provided to the target video clip by the reference audio clip from the serving end.

With reference to Fig. 3b, in case that the second cache lacks the target beat sync information and the target beat sync information is not present on the serving end either, a video editor VE of the local terminal may be directly called to parse the audio beats in the reference audio clip and the target beat sync information to be provided to the target video clip by the reference audio clip is generated by parsing; and the generated target beat sync information is written into the second cache in full to facilitate subsequent reading of the target beat sync information from the second cache.

Referring to Fig. 3b, in case that the second cache lacks the target beat sync information and the target beat sync information is present on the serving end, to improve the efficiency for obtaining the beat sync, in addition to pulling from the serving end the target beat sync information to be provided to the target video clip by the reference audio clip, the video editor of the local terminal is called to parse the audio beats in the reference audio clip to generate the target beat sync information to be provided to the target video clip by the reference audio clip synchronously. In this way, the generation of the beat sync by the video editor of the local terminal is in competition with the pulling of the beat sync from the serving end, and the first completed target beat sync information to be provided to the target video clip by the reference audio clip is written into the second cache in full. The beat sync information, whether it is generated locally or pulled from the serving end, would be written into the cache in full for future use.

S250: performing a curve speed change on the target video clip according to the target beat sync information, to generate the first target video editing result of adding the video effects corresponding to the second editing operation to the target video clip.

With reference to Fig. 3a, the target beat sync information matching with the target video clip indicates key time points or positions determined during the video editing procedure, to mark the portion of the video in need of beat sync. The target video clip may become an object on which a curve speed change may be performed or to which video effects are added.

After the target beat sync information matching with the target video clip is obtained, the play speed of the target video clip between key time points may be adjusted according to the target beat sync information to achieve the varying speed effect. The curve speed change may allow the video to be played at different speeds at various time points, thereby creating a unique visual effect. The first target video editing result is obtained from performing the curve speed change on the target video clip and may be saved as a new video file or be provided for further video production.

Optionally, on the basis of the curve speed change, the video effects corresponding to the second editing operation not only include effects editing operations for the target video clip, such as adjusting colors, applying transition effects among other effects editing operations, but also contain special processing for changing video appearance and effects, e.g., blur, color correction, filter, particle effects among other effects editing operations.

As an alternative yet non-restrictive implementation, performing the curve speed change on the target video clip according to the target beat sync information, to generate the first target video editing result of adding the video effects corresponding to the second editing operation to the target video clip includes the following steps E1-E2:
Step E1: determining first target curve speed change parameter information to be provided to the target video clip by the reference audio clip in accordance with the target beat sync information, wherein the reference audio clip is a partial audio clip overlapping with the target video clip on a reference timeline on the audio editing track and the reference timeline is a timeline corresponding to the video editing track and the audio editing track of the video editing interface.
Step E2: performing a curve speed change on the target video clip according to first target curve speed change parameter information, to generate the first target video editing result of adding the video effects corresponding to the second editing operation to the target video clip.

On the audio editing track of the video editing interface, a partial audio clip overlapping with the target video clip on the reference timeline may serve as the reference audio clip corresponding to the target video clip. According to orthogonality between the reference audio clip and the target video clip on the editing track, five cases are derived. It is expected that the curve speed change only occurs in the orthogonal video clip section and non-orthogonal part is played at the original speed. Without the reference audio clip, the default variable speed is used to perform the curve speed change on the entire target video clip.

As an alternative yet non-restrictive implementation, performing the curve speed change on the target video clip according to the first target curve speed change parameter information, to generate the first target video editing result of adding the video effects corresponding to the second editing operation to the target video clip includes the following steps F1-F2;
Step F1: performing the curve speed change on a reference video clip in the target video clip according to the first target curve speed change parameter information, wherein the reference video clip is a partial video clip of the target video clip overlapping with the reference audio clip on the reference timeline.
Step F2: generating, in accordance with a curve speed change result of the reference video clip, the first target video editing result of adding the video effects corresponding to the second editing operation to the target video clip.

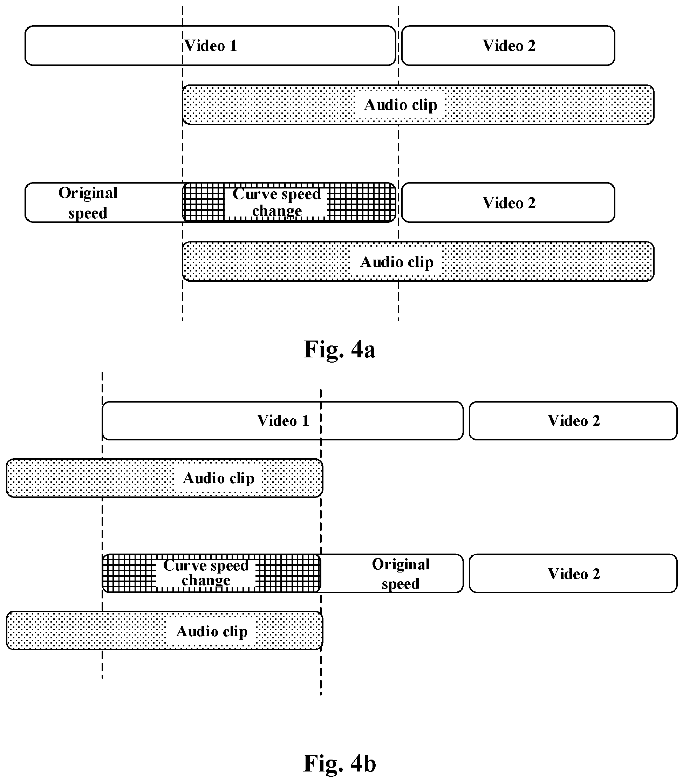

With reference to Fig. 4a, video 1 is regarded as the target video clip; in case that the orthogonal overlapping part between the target video clip and the reference audio clip is the latter half of the target video clip, the first half of the target video clip is played at the original speed and the latter half of the target video clip (i.e., the orthogonal overlapping part) is subject to the curve speed change.

With reference to Fig. 4b, video 1 is regarded as the target video clip; in case that the orthogonal overlapping part between the target video clip and the reference audio clip is the first half of the target video clip, the first half of the target video clip is subject to the curve speed change and the latter half of the target video clip is played at the original speed.

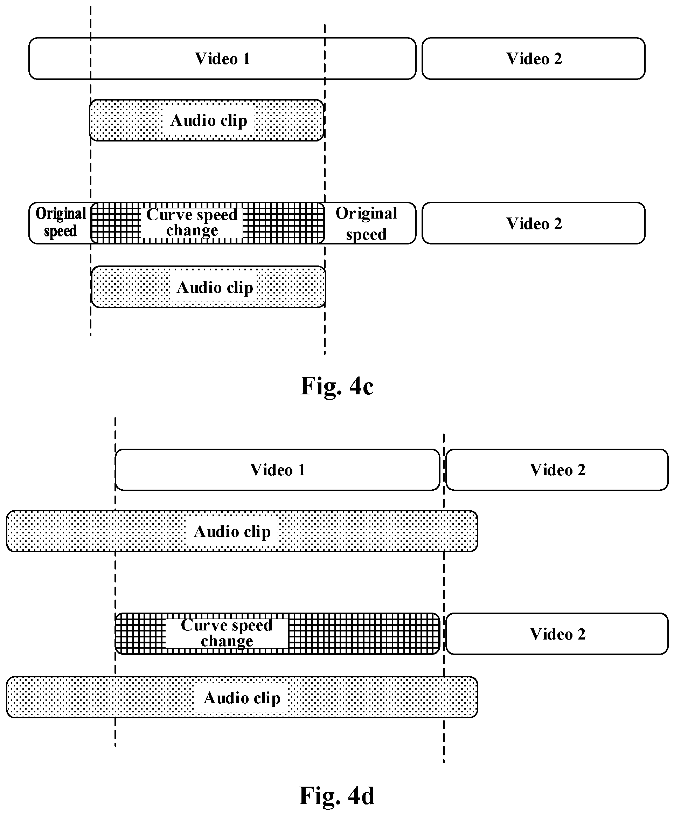

With reference to Fig. 4c, video 1 is regarded as the target video clip; in case that the orthogonal overlapping part between the target video clip and the reference audio clip is the middle part of the target video clip, the first half and the latter half of the target video clip are played at the original speed and the middle orthogonal part is subject to the curve speed change.

With reference to Fig. 4d, video 1 is regarded as the target video clip; if the orthogonal overlapping part between the target video clip and the reference audio clip has a length equal to that of the target video clip, the entire target video clip is subject to the curve speed change.

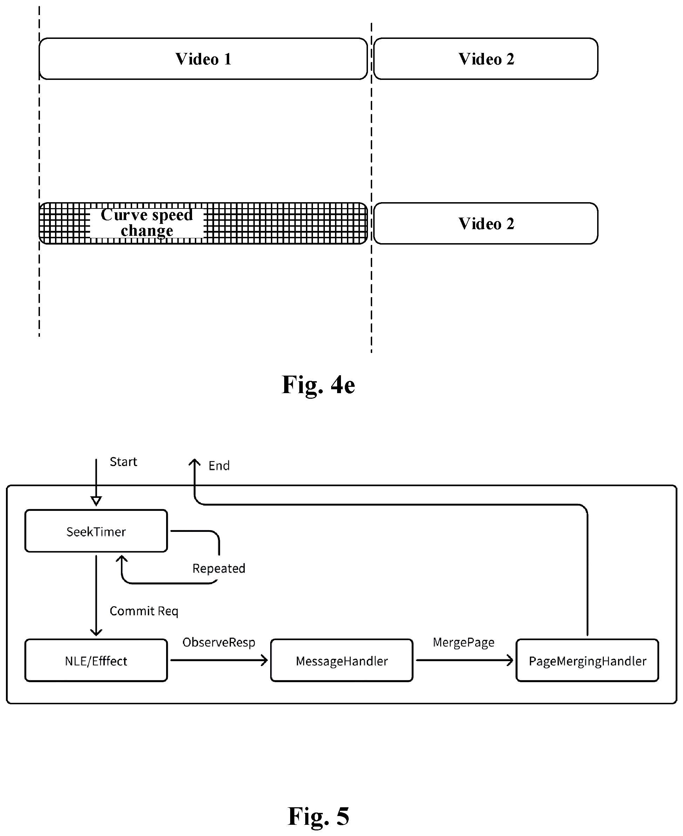

With reference to Fig. 4e, video 1 is regarded as the target video clip; if the target video clip lacks a matching reference audio clip, the entire target video clip is subject to the default curve speed change.

As an alternative yet non-restrictive implementation, determining the first target curve speed change parameter information to be provided to the target video clip by the reference audio clip in accordance with the target beat sync information includes the following steps H1-H2:
Step H1: sending to a curve speed change parameter generator a request for obtaining curve speed change parameters based on the target beat sync information and monitoring a response of the curve speed change parameter generator.
Step H2: determining the first target curve speed change parameter information to be provided to the target video clip by the reference audio clip based on a monitored response message generated by the curve speed change parameter generator.

With reference to Fig. 5, inside a framer, there is a timer which can regularly call the NLE frame operation interface to submit the request for obtaining the curve speed change parameter EffectRequest to the curve speed change parameter generator Effect. Meanwhile, the framer would register Effect Response for monitoring. Upon arrival of a response message generated by the curve speed change parameter generator, an externally injected MessageHandler would be utilized to process the message. If the response message Response generated by the curve speed change parameter generator includes paging, an external PageMergingHandler would be called for final processing after all of the response messages generated by the curve speed change parameter generator are collected. Subsequently, the processed first target curve speed change parameter information provided to the target video clip by the reference audio clip is returned to the caller.

The framer is designed to be a basic component for communicating with the curve speed change parameter generator Effect. Different services may be injected with self-defined MessageHandler and PageMergingHandler to implement multiplexing. In this way, reusability and expandability of the codes may be improved and different services are processed in a customized way based on their own needs.

S260: presenting a new video corresponding to the target video editing result.

In accordance with the technical solution of the embodiments of the present disclosure, when the target video editing task is performed on the target video materials, a target video editing task corresponding to a target video material is created; in response to a first editing operation for triggering the target video editing task, a target video clip formed from the target video material is placed on a video editing track of a video editing interface; in response to a second editing operation for the target video clip, a target video editing result of adding video effects corresponding to the second editing operation to the target video clip is determined, wherein the video effects corresponding to the second editing operation at least include video beat sync effects; and a new video corresponding to the target video editing result is presented. The present solution can achieve quickly adding video beat sync effects to the video without professional effect editing skills, which greatly improves the efficiency of effects editing of the target video materials and makes the video production process more efficiently and conveniently.

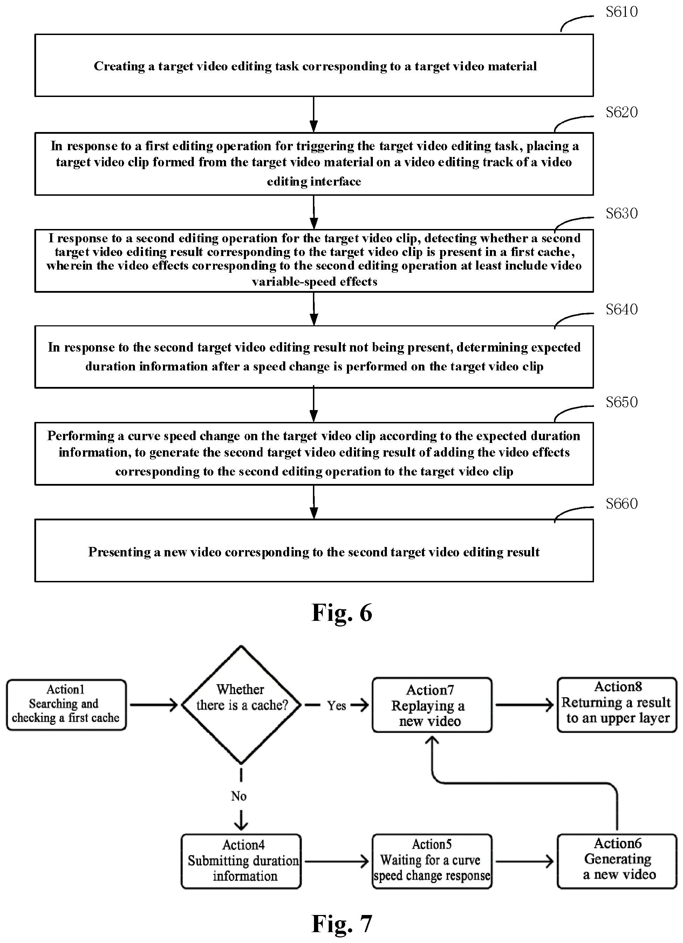

Fig. 6 illustrates a schematic flowchart of a further video processing method provided by embodiments of the present disclosure. On the basis of the technical solution of the above embodiments, the technical solution according to this embodiment further optimizes the procedure of determining a target video editing result of adding video effects corresponding to the second editing operation to the target video clip in the preceding embodiments. This embodiment may be combined with respective optional solutions in the above one or more embodiments.

As shown in Fig. 6, the video processing method according to this embodiment of the present disclosure may include the following procedure of:
S610: creating a target video editing task corresponding to a target video material.
S620: in response to a first editing operation for triggering the target video editing task, placing a target video clip formed from the target video material on a video editing track of a video editing interface.
S630: in response to a second editing operation for the target video clip, detecting whether a second target video editing result corresponding to the target video clip is present in a first cache, wherein the video effects corresponding to the second editing operation at least include video variable-speed effects.

Referring to Fig. 7, for the target video clip placed on the video editing track of the video editing interface, if the second editing operation has been triggered for the same target video clip before, the second editing operation is triggered for the target video clip again, and a second target video editing result corresponding to a target video clip generated from adding video variable-speed effects corresponding to the second editing operation to the target video clip is cached in a first cache.

For this, with reference to Fig. 7, when it is required to trigger the second editing operation for the target video clip placed on the video editing track of the video editing interface, video editing results saved in the first cache may be traversed to determine whether the second target video editing result generated from adding video variable-speed effects corresponding to the second editing operation to the target video clip is present. If yes, the second target video editing result corresponding to the target video clip placed on the video editing track of the video editing interface is directly read from the first cache.

With respect to the above approach, in case that the video clip on the video track is not modified or the video clip is modified without affecting its video effect, if the video editing result can be directly obtained from the previous caches and further used, an operation of obtaining the target video editing result by the second editing operation has a delay of 0. This means that the target video editing result of the target video clip would be presented immediately without waiting after the second editing operation is performed. On account of such instant response experience, the procedure is extremely fluent and the second editing operation is quite smooth and natural.

Optionally, in response to the second target video editing result being present, reading from the first cache the second target video editing result corresponding to the target video clip.

With respect to the above approach, in case that the video clip on the video track is not modified or the video clip is modified without affecting its video effect, if the second target video editing result can be directly obtained from the previous caches and further used, an operation of obtaining the target video editing result by the second editing operation has a delay of 0. This means that the second target video editing result of the target video clip would be presented immediately without waiting after the second editing operation is performed. On account of such instant response experience, the procedure is extremely fluent and the second editing operation is quite smooth and natural.

As an alternative yet non-restrictive implementation, with reference to Fig. 7, detecting whether the first target video editing result corresponding to the target video clip is present in the first cache includes the following steps K1-K2:
Step K1: determining a second video identifier corresponding to the target video clip, wherein the second video identifier is determined based on a storage path of the target video material corresponding to the target video clip and start and end time of the target video clip.
Step K2: detecting whether the second target video editing result matching with the second video identifier corresponding to the target video clip is present in the first cache.

In case that the video clip on the video track is not modified or the video clip is modified without affecting the final effect, a response delay of the second editing operation may be reduced to 0 by using the previous caches, which greatly improves the fluency of the operation. However, it is a risky operation to introduce the cache since an error may be introduced under inaccurate calculation scenarios, which leads to changes that could not be monitored and further causes application failure. In this regard, it is required to design a calculation factor of the cache to decide cache accuracy. In the procedure of adding the video variable-speed effects corresponding to the second editing operation to the target video clip, the solution primarily considers the target video clip per se and a uniqueness of the video is marked by a file path of the video clip per se plus start and end time of the play of each video. In this way, a second video identifier corresponding to the target video clip is obtained to further accurately search the corresponding first target video editing result in the cache.

S640: in response to the second target video editing result not being present, determining expected duration information after a speed change is performed on the target video clip.

S650: performing a curve speed change on the target video clip according to the expected duration information, to generate the second target video editing result of adding the video effects corresponding to the second editing operation to the target video clip.

As an alternative yet non-restrictive implementation, with reference to Figs. 5 and 7, performing the curve speed change on the target video clip according to the expected duration information, to generate the second target video editing result of adding the video effects corresponding to the second editing operation to the target video clip includes the following steps M1-M3:
Step M1: sending to a curve speed change parameter generator a request for obtaining curve speed change parameters based on the expected duration information and monitoring a response of the curve speed change parameter generator.
Step M2: determining second target curve speed change parameter information to be provided to the target video clip by the reference audio clip based on a monitored response message generated by the curve speed change parameter generator.
Step M3: performing the curve speed change on the target video clip according to the second target curve speed change parameter information, to generate the second target video editing result of adding the video effects corresponding to the second editing operation to the target video clip.
S660: presenting a new video corresponding to the target video editing result.

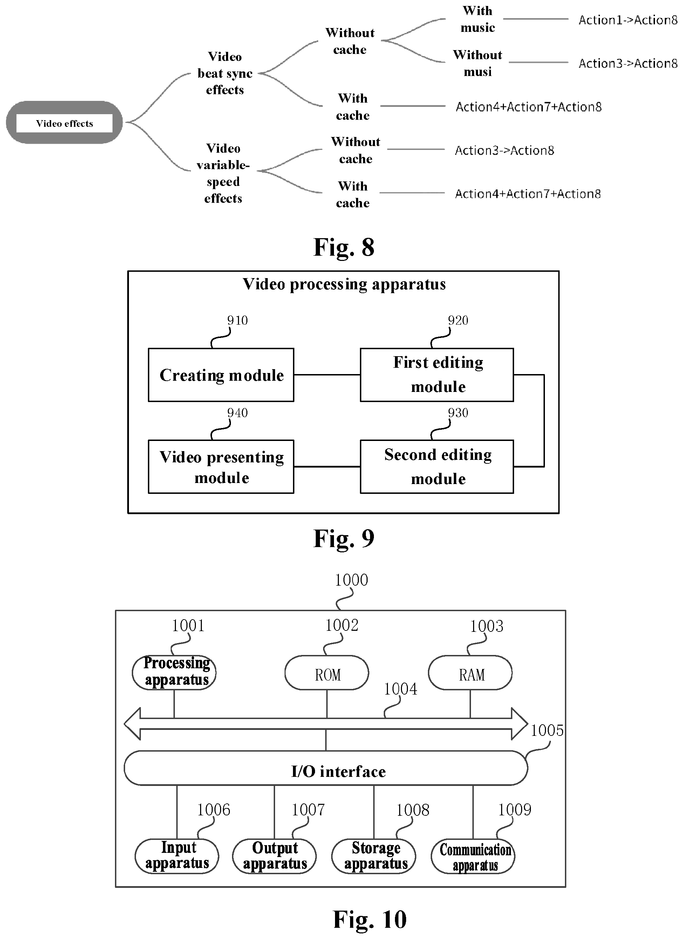

With reference to Fig. 8, adding the video effects corresponding to the second editing operation to the target video clip includes two procedures, i.e., video beat sync effects and video variable-speed effects. These two are described as two procedures because many procedure branches may be derived separately depending on whether the first cache is hit and whether the reference audio clip is present. A total of five branches are derived.

In accordance with the technical solution of the embodiments of the present disclosure, when the target video editing task is performed on the target video materials, a target video editing task corresponding to a target video material is created; in response to a first editing operation for triggering the target video editing task, a target video clip formed from the target video material is placed on a video editing track of a video editing interface; in response to a second editing operation for the target video clip, a target video editing result of adding video effects corresponding to the second editing operation to the target video clip is determined, wherein the video effects corresponding to the second editing operation at least include video variable-speed effects; and a new video corresponding to the target video editing result is presented. The present solution can quickly add video variable-speed effects to the video without professional effect editing skills, which greatly improves the efficiency of effects editing of the target video materials and makes the video production process more efficiently and conveniently.

Fig. 9 illustrates a structural diagram of a video processing apparatus provided by embodiments of the present disclosure. Embodiments of the present disclosure are adapted to situations where video beat sync effects and video variable-speed effects are added to video materials. The video processing apparatus may be implemented in the form of software and/or hardware and is generally integrated on any electronic devices having network communication functions. The electronic device may be mobile terminal, PC terminal or server etc.

As shown in Fig. 9, the video processing apparatus according to embodiments of the present disclosure may include the following:
a creating module 910 for creating a target video editing task corresponding to a target video material;
a first editing module 920 for, in response to a first editing operation for triggering the target video editing task, placing a target video clip formed from the target video material on a video editing track of a video editing interface;
a second editing module 930 for, in response to a second editing operation for the target video clip, determining a target video editing result of adding video effects corresponding to the second editing operation to the target video clip, wherein the video effects corresponding to the second editing operation at least include video beat sync effects or video variable-speed effects;
a video presenting module 940 for presenting a new video corresponding to the target video editing result.

Based on the above embodiments, optionally, the second editing operation specifically is a triggering operation of a target video effect identifier in at least one candidate video effect identifier presented for the target video clip, wherein the at least one candidate video effect identifier presented on the video editing interface is presented at a target effect display window, and the target effect display window is presented when an effect addition identifier presented on the video editing interface corresponding to the target video clip is triggered.

Based on the above embodiments, optionally, the video effects corresponding to the second editing operation at least include the video beat sync effects and determining the target video editing result of adding the video effects corresponding to the second editing operation to the target video clip includes:
detecting whether a first target video editing result corresponding to the target video clip is present in a first cache;
in response to the first target video editing result corresponding to the target video clip not being present in the first cache, determining target beat sync information matching with the target video clip, wherein the target beat sync information is provided for indicating a position point or a time point in need of beat sync in the target video clip, to produce a visual effect for a sense of rhythm and movement for the target video clip at the position point or the time point in need of beat sync;
performing a curve speed change on the target video clip according to the target beat sync information, to generate the first target video editing result of adding the video effects corresponding to the second editing operation to the target video clip;
in response to the first target video editing result corresponding to the target video clip being present in the first cache, reading from the first cache the first target video editing result corresponding to the target video clip.

Based on the above embodiments, optionally, determining the target beat sync information matching with the target video clip includes:
detecting whether a reference audio clip is present on an audio editing track of the video editing interface corresponding to the target video clip, wherein the reference audio clip is provided for providing the position point or the time point in need of beat sync in the target video clip on the video editing track;
in response to the reference audio clip being present, determining the target beat sync information to be provided to the target video clip by the reference audio clip, wherein the target beat sync information includes a number of musical beats in the reference audio clip and a time offset of each musical beat on a timeline corresponding to the reference audio clip;
in response to the reference audio clip not being present, determining pre-stored default beat sync information as the target beat sync information matching with the target video clip.

Based on the above embodiments, optionally, detecting whether the first target video editing result corresponding to the target video clip is present in the first cache includes:
determining a first video identifier corresponding to the target video clip, wherein the first video identifier is determined based on a storage path of the target video material corresponding to the target video clip, start and end time of the target video clip, an audio identifier of the reference audio clip corresponding to the target video clip and a relative position between the reference audio clip and the target audio clip on a reference timeline, wherein the reference audio clip is a partial audio clip overlapping with the target video clip on the reference timeline the an audio editing track, and wherein the reference timeline is a timeline corresponding to the video editing track and the audio editing track of the video editing interface;
detecting whether the first target video editing result matching with the first video identifier corresponding to the target video clip is present in the first cache.

Based on the above embodiments, optionally, determining the target beat sync information to be provided to the target video clip by the reference audio clip includes:
detecting whether the target beat sync information to be provided to the target video clip by the reference audio clip is present in a second cache;
in response to the target beat sync information being present in the second cache, obtaining pre-stored target beat sync information matching with the target video clip in the second cache;
in response to the target beat sync information not being present in the second cache, obtaining the target beat sync information to be provided to the target video clip by the reference audio clip by using a serving end or a local terminal to parse audio beats in the reference audio clip.

Based on the above embodiments, optionally, obtaining the target beat sync information to be provided to the target video clip by the reference audio clip by using a serving end or a local terminal to parse audio beats in the reference audio clip includes:
detecting whether the target beat sync information to be provided to the target video clip by the reference audio clip is present on the serving end;
in response to the target beat sync information not being present in the second cache and not being present on the serving end, obtaining from the second cache the target beat sync information to be provided to the target video clip by the reference audio clip corresponding to first beat sync information after first beat sync information is written into the second cache in full, wherein the first beat sync information is the target beat sync information to be provided to the target video clip by the reference audio clip generated from parsing the audio beats in the reference audio clip by calling a video editor of the local terminal;
in response to the target beat sync information not being present in the second cache but presenting on the serving end, obtaining from the second cache the target beat sync information to be provided to the target video clip by the reference audio clip corresponding to second beat sync information after the second beat sync information is written into the second cache in full, wherein the second beat sync information is the target beat sync information to be provided to the target video clip by the reference audio clip obtained first from a competition between a first obtaining operation and a second obtaining operation, wherein the first obtaining operation is provided to call the video editor of the local terminal to parse the audio beats in the reference audio clip to generate the target beat sync information to be provided to the target video clip by the reference audio clip, and wherein the second obtaining operation is provided for issuing a request to the serving end to pull the target beat sync information to be provided to the target video clip by the reference audio clip from the serving end.

Based on the above embodiments, optionally, performing the curve speed change on the target video clip according to the target beat sync information, to generate the first target video editing result of adding the video effects corresponding to the second editing operation to the target video clip includes:
determining first target curve speed change parameter information to be provided to the target video clip by the reference audio clip in accordance with the target beat sync information, wherein the reference audio clip is a partial audio clip overlapping with the target video clip on a reference timeline on the audio editing track and the reference timeline is a timeline corresponding to the video editing track and the audio editing track of the video editing interface;
performing a curve speed change on the target video clip according to first target curve speed change parameter information, to generate the first target video editing result of adding the video effects corresponding to the second editing operation to the target video clip.

Based on the above embodiments, optionally, determining the first target curve speed change parameter information to be provided to the target video clip by the reference audio clip in accordance with the target beat sync information includes:
sending to a curve speed change parameter generator a request for obtaining curve speed change parameters based on the target beat sync information and monitoring a response of the curve speed change parameter generator;
determining the first target curve speed change parameter information to be provided to the target video clip by the reference audio clip based on a monitored response message generated by the curve speed change parameter generator.

Based on the above embodiments, optionally, performing the curve speed change on the target video clip according to the first target curve speed change parameter information, to generate the first target video editing result of adding the video effects corresponding to the second editing operation to the target video clip includes:
performing the curve speed change on a reference video clip in the target video clip according to the first target curve speed change parameter information, wherein the reference video clip is a partial video clip of the target video clip overlapping with the reference audio clip on the reference timeline;
generating, in accordance with a curve speed change result of the reference video clip, the first target video editing result of adding the video effects corresponding to the second editing operation to the target video clip.

Based on the above embodiments, optionally, the video effects corresponding to the second editing operation at least include video variable speed effects and determining the target video editing result of adding the video effects corresponding to the second editing operation to the target video clip includes:
detecting whether a second target video editing result corresponding to the target video clip is present in a first cache;
in response to the second target video editing result not being present, determining expected duration information after a speed change is performed on the target video clip;
performing a curve speed change on the target video clip according to the expected duration information, to generate the second target video editing result of adding the video effects corresponding to the second editing operation to the target video clip;
in response to the second target video editing result being present, reading from the first cache the second target video editing result corresponding to the target video clip.

Based on the above embodiments, optionally, detecting whether the first target video editing result corresponding to the target video clip is present in the first cache includes:
determining a second video identifier corresponding to the target video clip, wherein the second video identifier is determined based on a storage path of the target video material corresponding to the target video clip and start and end time of the target video clip;
detecting whether the second target video editing result matching with the second video identifier corresponding to the target video clip is present in the first cache.

Based on the above embodiments, optionally, performing the curve speed change on the target video clip according to the expected duration information, to generate the second target video editing result of adding the video effects corresponding to the second editing operation to the target video clip includes:
sending to a curve speed change parameter generator a request for obtaining curve speed change parameters based on the expected duration information and monitoring a response of the curve speed change parameter generator;
determining second target curve speed change parameter information to be provided to the target video clip by the reference audio clip based on a monitored response message generated by the curve speed change parameter generator;
performing the curve speed change on the target video clip according to the second target curve speed change parameter information, to generate the second target video editing result of adding thevideo effects corresponding to the second editing operation to the target video clip.

In accordance with the technical solution of the embodiments of the present disclosure, when the target video editing task is performed on the target video materials, a target video editing task corresponding to a target video material is created; in response to a first editing operation for triggering the target video editing task, a target video clip formed from the target video material is placed on a video editing track of a video editing interface; in response to a second editing operation for the target video clip, a target video editing result of adding video effects corresponding to the second editing operation to the target video clip is determined, wherein the video effects corresponding to the second editing operation at least include video beat sync effects or video variable-speed effects; and a new video corresponding to the target video editing result is presented. The present solution can achieve quickly adding video beat sync effects and video variable-speed effects to the video without professional effect editing skills, which greatly improves the efficiency of effects editing of the target video materials and makes the video production process more efficiently and conveniently.

The video processing apparatus provided by the embodiments of the present disclosure can execute the video processing method according to any embodiments of the present disclosure. The apparatus includes corresponding functional modules for executing the video processing method and achieves advantageous effects.

It is to be noteworthy that the respective units and modules included in the above apparatus are divided only by functional logic. The units and modules may also be divided in other ways as long as they can fulfill the corresponding functions. Further, the names of the respective functional units are provided only to distinguish one from another, rather than restricting the protection scope of the embodiments of the present disclosure_{∘}

Fig. 10 illustrates a structural diagram of an electronic device provided by the embodiments of the present disclosure. With reference to Fig. 10, a structural diagram of an electronic device (e.g., terminal device or server in Fig. 10) 1000 adapted to implement embodiments of the present disclosure is shown. In the embodiments of the present disclosure, the terminal device may include, but not limited to, mobile terminals, such as mobile phones, notebooks, digital broadcast receivers, PDAs (Personal Digital Assistant), PADs (tablet computer), PMPs (Portable Multimedia Player) and vehicle terminals (such as car navigation terminal) and fixed terminals, e.g., digital TVs and desktop computers etc. The electronic device shown in Fig. 10 is just an example and will not restrict the functions and application ranges of the embodiments of the present disclosure.

According to Fig. 10, the electronic device 1000 may include a processing apparatus (e.g., central processor, graphic processor and the like) 1001, which can execute various suitable actions and processing based on the programs stored in the read-only memory (ROM) 1002 or programs loaded in the random-access memory (RAM) 1003 from a storage apparatus 1008. The RAM 1003 can also store all kinds of programs and data required by the operations of the electronic device 1000. Processing apparatus 1001, ROM 1002 and RAM 1003 are connected to each other via a bus 1004. The input/output (I/O) interface 1005 is also connected to the bus 1004.

Usually, the input apparatus 1006 (including touch screen, touchpad, keyboard, mouse, camera, microphone, accelerometer, gyroscope and like) and the output apparatus 1007 (including liquid crystal display (LCD), speaker and vibrator etc.), the storage apparatus 1008 (including tape and hard disk etc.) and the communication apparatus 1009 may be connected to the I/O interface 1005. The communication apparatus 1009 may allow the electronic device 1000 to exchange data with other devices through wired or wireless communications. Although Fig. 10 illustrates the electronic device 1000 having various units, it is to be understood that it is not a prerequisite to implement or provide all illustrated units. Alternatively, more or less units may be implemented or provided.

In particular, in accordance with embodiments of the present disclosure, the process depicted above with reference to the flowchart may be implemented as computer software programs. For example, the embodiments of the present disclosure include a computer program product including computer programs carried on a non-transient computer readable medium, wherein the computer programs include program codes for executing the method demonstrated by the flowchart. In these embodiments, the computer programs may be loaded and installed from networks via the communication apparatus 1009, or installed from the storage apparatus 1008, or installed from the ROM 1002. The computer programs, when executed by the processing apparatus 1001, performs the above functions defined in the video processing method according to the embodiments of the present disclosure.

Names of the messages or information exchanged between a plurality of apparatuses in the implementations of the present disclosure are provided only for explanatory purpose, rather than restricting the scope of the messages or information.

The electronic device provided by the embodiments of the present disclosure and the video processing method according to the above embodiments belong to the same inventive concept. The technical details not elaborated in these embodiments may refer to the above embodiments. Besides, these embodiments and the above embodiments achieve the same advantageous effects.

Embodiments of the present disclosure provide a computer storage medium on which computer programs are stored, which programs when executed by a processor implement the video processing method provided by the above embodiments.

It is to be explained the above disclosed computer readable medium may be computer readable signal medium or computer readable storage medium or any combinations thereof. The computer readable storage medium for example may include, but not limited to, electric, magnetic, optical, electromagnetic, infrared or semiconductor systems, apparatus or devices or any combinations thereof. Specific examples of the computer readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof. In the present disclosure, the computer readable storage medium may be any tangible medium that contains or stores programs. The programs may be utilized by instruction execution systems, apparatuses or devices in combination with the same. In the present disclosure, the computer readable signal medium may include a data signal propagated in baseband or as part of a carrier wave, carrying computer readable program codes therein. Such propagated data signals may take many forms, including but not limited to, electromagnetic signals, optical signals, or any suitable combinations thereof. The computer readable signal medium may also be any computer readable medium in addition to the computer readable storage medium. The computer readable signal medium may send, propagate, or transmit programs for use by or in connection with instruction execution systems, apparatuses or devices. Program codes contained on the computer readable medium may be transmitted by any suitable media, including but not limited to: electric wires, fiber optic cables and RF (radio frequency) etc., or any suitable combinations thereof.

In some implementations, clients and servers may communicate with each other via any currently known or to be developed network protocols, such as HTTP (Hyper Text Transfer Protocol) and interconnect with digital data communications in any forms or media (such as communication networks). Examples of the communication networks include Local Area Network (LAN), Wide Area Network (WAN), internet work (e.g., Internet) and end-to-end network (such as ad hoc end-to-end network), and any currently known or to be developed networks.

The above computer readable medium may be included in the aforementioned electronic device or stand-alone without fitting into the electronic device.

The above computer readable medium bears one or more programs. When the above one or more programs are executed by the electronic device, the electronic device is enabled to: create a target video editing task corresponding to a target video material; in response to a first editing operation for triggering the target video editing task, place a target video clip formed from the target video material on a video editing track of a video editing interface; in response to a second editing operation for the target video clip, determine a target video editing result of adding video effects corresponding to the second editing operation to the target video clip, wherein the video effects corresponding to the second editing operation at least include video beat sync effects or video variable-speed effects; and present a new video corresponding to the target video editing result.

Computer program instructions for executing operations of the present disclosure may be written in one or more programming languages or combinations thereof. The above programming languages include, but not limited to, object-oriented programming languages, e.g., Java, Smalltalk, C++ and so on, and traditional procedural programming languages, such as "C" language or similar programming languages. The program codes can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider).

The flow chart and block diagram in the drawings illustrate system architecture, functions and operations that may be implemented by system, method and computer program product according to various implementations of the present disclosure. In this regard, each block in the flow chart or block diagram can represent a module, a part of program segment or code, wherein the module and the part of program segment or code include one or more executable instruction for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Units described in the embodiments of the present disclosure may be implemented by software or hardware. In some cases, the name of the unit should not be considered as the restriction over the unit per se. For example, a first obtaining unit also may be described as "a unit for obtaining at least two Internet protocol addresses".

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

In the context of the present disclosure, machine readable medium may be tangible medium that may include or store programs for use by or in connection with instruction execution systems, apparatuses or devices. The machine readable medium may be machine readable signal medium or machine readable storage medium. The machine readable storage medium for example may include, but not limited to, electric, magnetic, optical, electromagnetic, infrared or semiconductor systems, apparatus or devices or any combinations thereof. Specific examples of the machine readable storage medium may include, but not limited to, electrical connection having one or more wires, portable computer disk, hard disk, random access memory (RAM), read-only memory (ROM), erasable programmable read only memory (EPROM or flash memory), fiber optics, portable compact disk read only memory (CD-ROM), optical storage device, magnetic storage device, or any suitable combinations thereof.

The above description only explains the preferred embodiments of the present disclosure and the technical principles applied. Those skilled in the art should understand that the scope of the present disclosure is not limited to the technical solution resulted from particular combinations of the above technical features, and meanwhile should also encompass other technical solutions formed from any combinations of the above technical features or equivalent features without deviating from the above disclosed inventive concept, such as the technical solutions formed by substituting the above features with the technical features disclosed here with similar functions.

Furthermore, although the respective operations are depicted in a particular order, it should be appreciated that the operations are not required to be completed in the particular order or in succession. In some cases, multitasking or multiprocessing is also beneficial. Likewise, although the above discussion comprises some particular implementation details, they should not be interpreted as limitations over the scope of the present disclosure. Some features described separately in the context of the embodiments of the description can also be integrated and implemented in a single embodiment. Conversely, all kinds of features described in the context of a single embodiment can also be separately implemented in multiple embodiments or any suitable sub-combinations.

Although the subject matter is already described by languages specific to structural features and/or method logic acts, it is to be appreciated that the subject matter defined in the attached claims is not limited to the above described particular features or acts. On the contrary, the above described particular features and acts are only example forms for implementing the claims.

## Claims

1. A video processing method, comprising:
creating a target video editing task corresponding to a target video material;
in response to a first editing operation for triggering the target video editing task, placing a target video clip formed from the target video material on a video editing track of a video editing interface;
in response to a second editing operation for the target video clip, determining a target video editing result of adding video effects corresponding to the second editing operation to the target video clip, wherein the video effects corresponding to the second editing operation at least include video beat sync effects or video variable-speed effects; and
presenting a new video corresponding to the target video editing result.

2. The method of claim 1, wherein the second editing operation specifically is a triggering operation of a target video effect identifier in at least one candidate video effect identifier presented for the target video clip, wherein the at least one candidate video effect identifier presented on the video editing interface is presented at a target effect display window, and the target effect display window is presented when an effect addition identifier presented on the video editing interface corresponding to the target video clip is triggered.

3. The method of claim 1, wherein the video effects corresponding to the second editing operation at least include video beat sync effects and determining the target video editing result of adding the video effects corresponding to the second editing operation to the target video clip comprises:
detecting whether a first target video editing result corresponding to the target video clip is present in a first cache;
in response to the first target video editing result corresponding to the target video clip not being present in the first cache, determining target beat sync information matching with the target video clip, wherein the target beat sync information is provided for indicating a position point or a time point in need of beat sync in the target video clip, to produce a visual effect for a sense of rhythm and movement for the target video clip at the position point or the time point in need of beat sync;
performing a curve speed change on the target video clip according to the target beat sync information, to generate the first target video editing result of adding the video effects corresponding to the second editing operation to the target video clip; and
in response to the first target video editing result corresponding to the target video clip being present in the first cache, reading from the first cache the first target video editing result corresponding to the target video clip.

4. The method of claim 3, wherein determining the target beat sync information matching with the target video clip comprises:
detecting whether a reference audio clip is present on an audio editing track of the video editing interface corresponding to the target video clip, wherein the reference audio clip is provided for providing the position point or the time point in need of beat sync in the target video clip on the video editing track;
in response to the reference audio clip being present, determining the target beat sync information to be provided to the target video clip by the reference audio clip, wherein the target beat sync information includes a number of musical beats in the reference audio clip and a time offset of each musical beat on a timeline corresponding to the reference audio clip; and
in response to the reference audio clip not being present, determining pre-stored default beat sync information as the target beat sync information matching with the target video clip.

5. The method of claim 4, wherein detecting whether the first target video editing result corresponding to the target video clip is present in the first cache comprises:
determining a first video identifier corresponding to the target video clip, wherein the first video identifier is determined based on a storage path of the target video material corresponding to the target video clip, start and end time of the target video clip, an audio identifier of the reference audio clip corresponding to the target video clip and a relative position between the reference audio clip and the target audio clip on a reference timeline, wherein the reference audio clip is a partial audio clip overlapping with the target video clip on the reference timeline on the audio editing track, and wherein the reference timeline is a timeline corresponding to the video editing track and the audio editing track of the video editing interface; and
detecting whether the first target video editing result matching with the first video identifier corresponding to the target video clip is present in the first cache.

6. The method of claim 4, wherein determining the target beat sync information to be provided to the target video clip by the reference audio clip comprises:
detecting whether the target beat sync information to be provided to the target video clip by the reference audio clip is present in a second cache;
in response to the target beat sync information being present in the second cache, obtaining pre-stored target beat sync information matching with the target video clip in the second cache; and
in response to the target beat sync information not being present in the second cache, obtaining the target beat sync information to be provided to the target video clip by the reference audio clip by using a serving end or a local terminal to parse audio beats in the reference audio clip.

7. The method of claim 6, wherein obtaining the target beat sync information to be provided to the target video clip by the reference audio clip by using a serving end or a local terminal to parse audio beats in the reference audio clip comprises:
detecting whether the target beat sync information to be provided to the target video clip by the reference audio clip is present on the serving end;
in response to the target beat sync information not being present in the second cache and not being present on the serving end, obtaining from the second cache the target beat sync information to be provided to the target video clip by the reference audio clip corresponding to first beat sync information after first beat sync information is written into the second cache in full, wherein the first beat sync information is the target beat sync information to be provided to the target video clip by the reference audio clip generated from parsing the audio beats in the reference audio clip by calling a video editor of the local terminal; and
in response to the target beat sync information not being present in the second cache but presenting on the serving end, obtaining from the second cache the target beat sync information to be provided to the target video clip by the reference audio clip corresponding to second beat sync information after the second beat sync information is written into the second cache in full, wherein the second beat sync information is the target beat sync information to be provided to the target video clip by the reference audio clip obtained first from a competition between a first obtaining operation and a second obtaining operation, wherein the first obtaining operation is provided to call the video editor of the local terminal to parse the audio beats in the reference audio clip to generate the target beat sync information to be provided to the target video clip by the reference audio clip, and wherein the second obtaining operation is provided for issuing a request to the serving end to pull the target beat sync information to be provided to the target video clip by the reference audio clip from the serving end.

8. The method of claim 4, wherein performing the curve speed change on the target video clip according to the target beat sync information, to generate the first target video editing result of adding the video effects corresponding to the second editing operation to the target video clip comprises:
determining first target curve speed change parameter information to be provided to the target video clip by the reference audio clip in accordance with the target beat sync information, wherein the reference audio clip is a partial audio clip overlapping with the target video clip on a reference timeline on the audio editing track and the reference timeline is a timeline corresponding to the video editing track and the audio editing track of the video editing interface; and
performing a curve speed change on the target video clip according to first target curve speed change parameter information, to generate the first target video editing result of adding the video effects corresponding to the second editing operation to the target video clip.

9. The method of claim 8, wherein determining the first target curve speed change parameter information to be provided to the target video clip by the reference audio clip in accordance with the target beat sync information comprises:
sending to a curve speed change parameter generator a request for obtaining curve speed change parameters based on the target beat sync information and monitoring a response of the curve speed change parameter generator; and
determining the first target curve speed change parameter information to be provided to the target video clip by the reference audio clip based on a monitored response message generated by the curve speed change parameter generator.

10. The method of claim 8, wherein performing the curve speed change on the target video clip according to the first target curve speed change parameter information, to generate the first target video editing result of adding the video effects corresponding to the second editing operation to the target video clip comprises:
performing the curve speed change on a reference video clip in the target video clip according to the first target curve speed change parameter information, wherein the reference video clip is a partial video clip of the target video clip overlapping with the reference audio clip on the reference timeline; and
generating, in accordance with a curve speed change result of the reference video clip, the first target video editing result of adding the video effects corresponding to the second editing operation to the target video clip.

11. The method of claim 1, wherein the video effects corresponding to the second editing operation at least include video variable speed effects and determining the target video editing result of adding the video effects corresponding to the second editing operation to the target video clip comprises:
detecting whether a second target video editing result corresponding to the target video clip is present in a first cache;
in response to the second target video editing result not being present, determining expected duration information after a speed change is performed on the target video clip;
performing a curve speed change on the target video clip according to the expected duration information, to generate the second target video editing result of adding the video effects corresponding to the second editing operation to the target video clip; and
in response to the second target video editing result being present, reading from the first cache the second target video editing result corresponding to the target video clip.

12. The method of claim 11, wherein detecting whether the first target video editing result corresponding to the target video clip is present in the first cache comprises:
determining a second video identifier corresponding to the target video clip, wherein the second video identifier is determined based on a storage path of the target video material corresponding to the target video clip and start and end time of the target video clip; and
detecting whether the second target video editing result matching with the second video identifier corresponding to the target video clip is present in the first cache.

13. The method of claim 11, wherein performing the curve speed change on the target video clip according to the expected duration information, to generate the second target video editing result of adding the video effects corresponding to the second editing operation to the target video clip comprises:
sending to a curve speed change parameter generator a request for obtaining curve speed change parameters based on the expected duration information and monitoring a response of the curve speed change parameter generator;
determining second target curve speed change parameter information to be provided to the target video clip by the reference audio clip based on a monitored response message generated by the curve speed change parameter generator; and
performing the curve speed change on the target video clip according to the second target curve speed change parameter information, to generate the second target video editing result of adding the video effects corresponding to the second editing operation to the target video clip.

14. A video processing apparatus, comprising:
a creating module for creating a target video editing task corresponding to a target video material;
a first editing module for, in response to a first editing operation for triggering the target video editing task, placing a target video clip formed from the target video material on a video editing track of a video editing interface;
a second editing module for, in response to a second editing operation for the target video clip, determining a target video editing result of adding video effects corresponding to the second editing operation to the target video clip, wherein the video effects corresponding to the second editing operation at least include video beat sync effects or video variable-speed effects; and
a video presenting module for presenting a new video corresponding to the target video editing result.

15. An electronic device, comprising:
one or more processors; and
a memory for storing one or more programs;
wherein the one or more programs, when executed by the one or more processors, cause the one or more processors to implement the video processing method according to any of claims 1-13.

16. A storage medium containing computer-executable instructions, wherein the computer-executable instructions, when executed by a computer processor, perform the video processing method according to any of claims 1-13.
